# EUROPEAN PATENT APPLICATION

(11) **EP 4 653 496 A1**
(43) Date of publication of application: **26.11.2025**
(21) Application number: 24744614.9
(22) Date of filing: 15.01.2024
(51) Int. Cl.: C08L 23/00, C08J 3/24, C08K 5/098, C08L 23/26

(54) **POLYOLEFIN COMPOSITION, SILANE CROSSLINKABLE MOLDED BODY, SILANE CROSSLINKED MOLDED BODY AND USE OF SAME**

(30) Priority: 16.01.2023 JP 2023004649
(71) Applicant: MCPP Innovation LLC, Tokyo 100-8251 (JP)
(72) Inventor: ANDO, Kei, Tokyo 100-8251 (JP)
(74) Representative: Hoffmann Eitle
(86) International application number: PCT/JP2024/000781
(87) International publication number: WO 2024/154691

(57) **Abstract**

The present invention relates to a polyolefin composition containing a zinc compound represented by a formula (1)' Zn(OCOR¹)(OCOR²) and a polyolefin, and in the formula (1)', R¹ and R² each independently represent a branched saturated hydrocarbon group having 9 to 11 carbon atoms.

## Description

### TECHNICAL FIELD

The present invention relates to a polyolefin composition, a silane-crosslinkable molded body, and a silane-crosslinked molded body and use of the same.

### BACKGROUND ART

A silane-crosslinked polyolefin obtained using a silanol condensation catalyst is widely used in applications such as coating materials for electric wires, cables, and the like, pipes, hoses, and tubes.

The silane-crosslinked polyolefin is obtained by graft-polymerizing an organic silane compound to a polyolefin in the presence of a radical generator, and further allowing moisture to act thereon in the presence of a silanol condensation catalyst. Such a reaction with moisture in the presence of a silanol condensation catalyst is called "silane water crosslinking".

In the silane water crosslinking, generally, a radical generator is allowed to act on polyolefin as a graft initiator in a molding machine such as an extruder. Accordingly, an organic silane compound such as alkoxysilane is graft-copolymerized with the polyolefin. Thereafter, moisture is allowed to act on a molded body formed by the molding machine, thereby causing a crosslinking reaction.

The crosslinking reaction is caused by hydrolysis and a condensation reaction of the organic silane compound by the action of the silanol condensation catalyst. The silanol condensation catalyst can be mixed into the molded body in advance or can permeate from a surface of the molded body.

As the silanol condensation catalyst used for the silane-crosslinked polyolefin, Patent Literature 1 discloses, instead of an organotin compound that has been widely used in the related art, a silanol condensation catalyst-containing composition containing a specific silanol condensation catalyst and polyethylene, which has a low concern about environmental load.

### CITATION LIST

### PATENT LITERATURE

Patent Literature 1: JP2018-090734A

### SUMMARY OF INVENTION

### TECHNICAL PROBLEM

The silanol condensation catalyst-containing composition disclosed in Patent Literature 1 has a low concern about environmental load, and exhibits good catalyst performance for a crosslinking reaction. However, as a result of studies by the present inventors, it has been found that the silanol condensation catalyst-containing composition has a yellowish color, and thus there remains room for improvement from the viewpoint of yellowness.

Therefore, an object of the present invention is to provide a polyolefin composition containing a zinc compound, which has a low concern about environmental load, has good crosslinking performance, and has reduced yellowness.

Another object of the present invention is to provide a silane-crosslinkable molded body containing the polyolefin composition, and a silane-crosslinked molded body in which such a molded body is crosslinked and use of the same.

The present invention is not limited to the objects described above, and it is also possible to position, as other objects of the present invention, functions and effects that are derived from each configuration shown in an embodiment of the invention to be described later and are not obtained by a technique in the related art.

### SOLUTION TO PROBLEM

As a result of intensive studies, the present inventors have found that the above problems can be solved by using a specific zinc compound, and have completed the present invention.

That is, an aspect of the present invention is as follows.
[1] A polyolefin composition including a zinc compound represented by the following formula (1)' and a polyolefin:

   Zn(OCOR¹)(OCOR²) (1)'

   (in the formula (1)', R¹ and R² each independently represent a branched saturated hydrocarbon group having 9 to 11 carbon atoms).
[2] The polyolefin composition according to [1], in which
   a content of tin is less than 100 ppm by mass.
[3] The polyolefin composition according to [1] or [2], in which
   a content of zinc is 0.10 mass% or more.
[4] The polyolefin composition according to [3], in which
   the content of zinc is 3.0 mass% or less.
[5] The polyolefin composition according to any of [1] to [4], including
   at least one selected from the group consisting of polyethylene and polypropylene as the polyolefin.
[6] The polyolefin composition according to any of [1] to [5], which is a catalyst masterbatch.
[7] The polyolefin composition according to any of [1] to [6], further comprising
   a silane-modified polyolefin.
[8] A silane-crosslinkable molded body containing a silane-modified polyolefin and a zinc compound represented by the following formula (1)':

   Zn(OCOR¹)(OCOR²) (1)'

   (in the formula (1)', R¹ and R² each independently represent a branched saturated hydrocarbon group having 9 to 11 carbon atoms).
[9] A silane-crosslinked molded body in which the silane-crosslinkable molded body according to [8] is crosslinked.
[10] The silane-crosslinked molded body according to [9], which is an electric wire coating material, a cable coating material, a pipe, a hose, a tube, a container, a sealing material, a film, or a sheet.
[11] The silane-crosslinked molded body according to [9], which is a coolant tube.
[12] The silane-crosslinked molded body according to [9], which is a coolant tube member.
[13] The silane-crosslinked molded body according to [9], which is a lithium ion battery separator.
[14] The silane-crosslinked molded body according to [9], which is a lithium ion battery separator member.
[15] Use of the silane-crosslinked molded body according to [9] as a coolant tube.
[16] Use of the silane-crosslinked molded body according to [9] as a coolant tube member.
[17] Use of the silane-crosslinked molded body according to [9] as a lithium ion battery separator.
[18] Use of the silane-crosslinked molded body according to [9] as a lithium ion battery separator member.

### ADVANTAGEOUS EFFECTS OF INVENTION

According to the present invention, it is possible to provide a polyolefin composition containing a zinc compound, which has a low concern about environmental load, has good crosslinking performance, and has reduced yellowness. Therefore, the silane-crosslinked molded body obtained using the polyolefin composition is also excellent in colorability and is very useful as a product such as an electric wire coating material.

### DESCRIPTION OF EMBODIMENTS

Hereinafter, embodiments of the present invention will be described in detail, but the following embodiments are examples (representative examples) of the embodiments of the present invention, and the present invention is not limited thereto. The present invention can be optionally modified and implemented without departing from the gist thereof.

In the present description, when the expression "to" is used with numerical values or physical property values before and after the expression, the values before and after it are included. In the present description, "mass%", "part by mass", and "ppm by mass" have the same meanings as "wt%", "part by weight", and "ppm by weight", respectively.

### <Polyolefin Composition>

The polyolefin composition according to the present embodiment contains a zinc compound represented by the following formula (1) and a polyolefin.

Zn(OCOR¹)(OCOR²) (1)

(In the formula (1), R¹ and R² each independently represent a saturated hydrocarbon group).

In the polyolefin composition according to the present embodiment, the zinc compound represented by the above formula (1) preferably functions as a silanol condensation catalyst. The zinc compound represented by the formula (1) is a compound having a low concern about environmental load, and has good catalyst performance, and exhibits excellent crosslinking performance. In addition, the obtained polyolefin composition has reduced yellowness. Therefore, by using the polyolefin composition, a molded body formed of a silane-modified polyolefin having excellent crosslinking performance or a crosslinked silane-crosslinked molded body is obtained, and at the same time, the yellowness is reduced.

In the zinc compound represented by the formula (1) in the present embodiment, it is preferable that R¹ and R² each independently represent a branched saturated hydrocarbon group having 9 to 11 carbon atoms. That is, the polyolefin composition according to the present embodiment preferably contains a zinc compound represented by the following formula (1)' and a polyolefin.

Zn(OCOR¹)(OCOR²) (1)'

(In the formula (1)', R¹ and R² each independently represent a branched saturated hydrocarbon group having 9 to 11 carbon atoms).

It was found that the silanol condensation catalyst-containing composition disclosed in Patent Literature 1 has a unique odor, and it was found that the polyolefin composition according to the present embodiment can reduce an odor in addition to reduction of yellowness. Therefore, by using the polyolefin composition, the odor can be reduced even in the molded body formed of a silane-modified polyolefin or the silane-crosslinked molded body.

The reason why the polyolefin composition according to the present embodiment exhibits the above effects is unclear, but it is presumed to be as follows.

The silanol condensation catalyst specifically disclosed in Patent Literature 1 contains a predetermined amount of an alkylamine as an active component, and as compared to this, the zinc compound represented by the formula (1), particularly the zinc compound represented by the formula (1)' has reduced yellowness and odor. Therefore, it is considered that by blending the zinc compound represented by the formula (1) or the formula (1)' as the silanol condensation catalyst, the yellowness and the odor can be reduced both as a polyolefin composition and as a molded body formed of a silane-modified polyolefin or a silane-crosslinked molded body.

In addition to the above, the presence of the zinc compound represented by the above formula (1) or formula (1)' can realize crosslinking performance equivalent to that of the silanol condensation catalyst-containing composition specifically disclosed in Patent Literature 1. The reason thereof is considered to be that, in the zinc compound represented by the formula (1) or the formula (1)', a functional group bonded or coordinated to a zinc element rapidly changes to an OH group in the presence of water. It is considered that high catalyst activity of a silanol condensation reaction is exhibited with respect to the silane-modified polyolefin due to the rapid change of the functional group.

From the above reason, it is considered that the polyolefin composition containing the zinc compound in the present embodiment exhibits excellent crosslinking performance equivalent to that of the silanol condensation catalyst-containing composition disclosed in Patent Literature 1, and has reduced yellowness and odor.

### <<Zinc Compound>>

The zinc compound in the present embodiment acts as a catalyst component in the silanol condensation reaction when the silane-crosslinked polyolefin is obtained.

The zinc compound is a zinc compound represented by the following formula (1), and is preferably a zinc compound represented by the formula (1)'.

Zn(OCOR¹)(OCOR²) (1)

(In the formula (1), R¹ and R² each independently represent a saturated hydrocarbon group).

Zn(OCOR¹)(OCOR²) (1)'

(In the formula (1)', R¹ and R² each independently represent a branched saturated hydrocarbon group having 9 to 11 carbon atoms).

In the zinc compound represented by the formula (1), R¹ and R² each independently represent a saturated hydrocarbon group. The number of carbon atoms of the saturated hydrocarbon group is preferably 5 to 15, more preferably 7 to 13, and further preferably 9 to 11. Here, from the viewpoint of controlling the silanol condensation reaction, the number of carbon atoms is preferably 5 or more, more preferably 7 or more, and further preferably 9 or more, and is preferably 15 or less, more preferably 13 or less, and further preferably 11 or less.

The saturated hydrocarbon group may be linear, branched, or cyclic, and from the viewpoint of controlling the silanol condensation reaction, it is preferable that at least one of R¹ and R² has a branch, and more preferable that both R¹ and R² have a branch. In addition, it is more preferable that at least one of R¹ and R² is a branched saturated hydrocarbon group having 5 to 15 carbon atoms, and further preferable that both R¹ and R² are branched saturated hydrocarbon groups having 5 to 15 carbon atoms, and further preferable branched saturated hydrocarbon groups having 9 to 11 carbon atoms.

Further, in the saturated hydrocarbon group, it is also preferable that R¹ and R² are the same.

A content of the zinc compound represented by the above formula (1) or formula (1)' in the polyolefin composition according to the present embodiment is preferably 0.3 mass% or more, and more preferably 0.3 mass% to 15 mass%. Here, from the viewpoint of exhibiting a function as a silanol condensation catalyst, the above content is preferably 0.3 mass% or more, more preferably 0.4 mass% or more, further preferably 0.5 mass% or more, and still further preferably 0.8 mass% or more. In addition, from the viewpoint of reducing yellowness and an odor of the obtained polyolefin composition, the above content is preferably 15 mass% or less, more preferably 10 mass% or less, and further preferably 5 mass% or less. When two or more zinc compounds represented by the above formula (1) or formula (1)' are contained, a total content thereof is preferably within the above range.

A content of zinc in the polyolefin composition according to the present embodiment is preferably 0.10 mass% or more, and preferably 0.10 mass% to 3.0 mass%. Here, from the viewpoint of exhibiting the function as a silanol condensation catalyst, the above content is preferably 0.10 mass% or more, more preferably 0.11 mass% or more, and further preferably 0.12 mass% or more. In addition, from the viewpoint of reducing yellowness and an odor of the obtained polyolefin composition, the above content is preferably 3.0 mass% or less, more preferably 2.0 mass% or less, and further preferably 1.0 mass% or less.

A content of the zinc compound represented by the above formula (1) or formula (1)' in the silanol condensation catalyst in the present embodiment is preferably 10 mass% to 100 mass%. Here, from the viewpoint of expressing an effect obtained by the zinc compound represented by the formula (1) or the formula (1)', the above content is preferably 10 mass% or more, more preferably 40 mass% or more, further preferably 70 mass% or more, and still further preferably 85 mass% or more. In addition, from the viewpoint of reducing an odor of the obtained polyolefin composition, the above content is particularly preferably 90 mass% or more. An upper limit of the above content is not particularly limited, and may be 100 mass%, that is, the silanol condensation catalyst may consist of only the zinc compound represented by the above formula (1) or formula (1)'. When two or more zinc compounds represented by the above formula (1) or formula (1)' are contained, a total content thereof is preferably within the above range.

The silanol condensation catalyst in the present embodiment may contain another component other than the zinc compound represented by the above formula (1) or formula (1)'. Examples of the another component include other metal compounds and organic solvents, and those known in the related art can be adopted.

Due to the presence of the zinc compound represented by the formula (1) or the formula (1)', the polyolefin composition according to the present embodiment has a low concern about environmental load, has good crosslinking performance, and has reduced yellowness. Therefore, for example, tin known as a catalyst in the related art may not be substantially contained. Specifically, a content of tin in the polyolefin composition according to the present embodiment may be less than 100 ppm by mass.

The zinc compound represented by the formula (1) or the formula (1)' in the present embodiment may be produced or a commercially available product may be used. As the commercially available product, for example, a product satisfying the formula (1) or the formula (1)' from a K-KAT (registered trademark) series manufactured by King Industries can be used.

### <<Polyolefin>>

The polyolefin composition according to the present embodiment contains a polyolefin.

The polyolefin in the present embodiment is not particularly limited, and a polyolefin known in the related art can be used. However, the polyolefin does not include a silane-modified polyolefin to be described later, and is used separately from the silane-modified polyolefin.

Examples of the polyolefin in the present embodiment include polyethylene and polypropylene, and the polyolefin preferably contains at least one selected from the group consisting of polyethylene and polypropylene.

### ·Polyethylene

As the polyethylene, any polyethylene such as the following can be used: ethylene homopolymers such as high-density polyethylene (HDPE), low-density polyethylene (LDPE), and linear low-density polyethylene (LLDPE); and ethylene-α-olefin copolymers such as ethylene-propylene copolymers, ethylene-1-butene copolymers, ethylene-1-pentene copolymers, ethylene-1-hexene copolymers, ethylene-1-octene copolymers, and ethylene-propylene-1-hexene copolymers. Among these, the ethylene homopolymer is preferable, and the low-density polyethylene (LDPE) is more preferable.

The polyethylene may be used alone, or two or more types may be used in combination.

A melt flow rate (MFR) of the polyethylene in the present embodiment is not particularly limited, and is generally 0.1 g/10 min to 80 g/10 min. Here, the MFR of the polyethylene is generally 0.1 g/10 min or more, but from the viewpoint of moldability of the crosslinked silane-modified polyolefin and uniform dispersibility during melt-kneading with the silane-modified polyolefin, the MFR is preferably 0.5 g/10 min or more, and more preferably 1 g/10 min or more. In addition, the MFR of the polyethylene is generally 80 g/10 min or less, but from the same viewpoint as described above, the MFR is preferably 60 g/10 min or less, more preferably 40 g/10 min or less, further preferably 20 g/10 min or less, and particularly preferably 15 g/10 min or less. In the present description, the MFR of the polyethylene is a value measured at a temperature of 190°C and a load of 21.2 N based on JIS K 7210:1999.

A density of the polyethylene in the present embodiment is generally 0.850 g/cm³ to 0.970 g/cm³, and preferably 0.855 g/cm³ to 0.965 g/cm³. In the present description, the density of the polyethylene is a value measured based on JIS K 7112:1999.

### ·Polypropylene

The polypropylene in the present embodiment may be a propylene homopolymer or a propylene-ethylene copolymer. As the propylene-ethylene copolymer, for example, any of propylene-α-olefin copolymers such as a propylene-1-butene copolymer and a propylene-ethylene-1-butene copolymer can be used.

The polypropylene may be used alone, or two or more types may be used in combination.

A melt flow rate (MFR) of the polypropylene in the present embodiment is not particularly limited, and is generally 0.1 g/10 min to 120 g/10 min. Here, the MFR of the polypropylene is generally 0.1 g/10 min or more, but from the viewpoint of moldability of the crosslinked silane-modified polyolefin and uniform dispersibility during melt-kneading with the silane-modified polypropylene, the MFR is preferably 0.3 g/10 min or more, and more preferably 0.5 g/10 min or more. In addition, the MFR of the polypropylene is generally 120 g/10 min or less, but from the same viewpoint as described above, the MFR is preferably 100 g/10 min or less, more preferably 80 g/10 min or less, further preferably 60 g/10 min or less, and particularly preferably 40 g/10 min or less. In the present description, the MFR of the polypropylene is a value measured at a temperature of 230°C and a load of 21.2 N based on JIS K 7210:1999.

A density of the polypropylene in the present embodiment is generally 0.850 g/cm³ to 0.930 g/cm³, and preferably 0.855 g/cm³ to 0.920 g/cm³. In the present description, the density of the polypropylene is a value measured based on JIS K 7112:1999.

### ·Polyolefin

In a case where the polyolefin in the present embodiment is, for example, polyethylene or polypropylene, it is preferable to use a polyolefin satisfying at least one of the MFR and the density described above, and it is more preferable to use a polyolefin satisfying both the MFR and the density. Accordingly, the polyolefin composition according to the present embodiment can be easily produced with good handling, and the polyolefin composition can be more uniformly mixed and dispersed in the silane-modified polyolefin.

The polyolefin in the present embodiment may be produced or a commercially available product may be used. Examples of the commercially available product include Novatec (registered trademark) series, Newcon (registered trademark) series, Wintec (registered trademark) series, Welnex (registered trademark) series, and Waymax (registered trademark) series that are manufactured by Japan Polypropylene Corporation, and Zelas (registered trademark) series manufactured by Mitsubishi Chemical Corporation.

### <<Silane-Modified Polyolefin>>

The polyolefin composition according to the present embodiment may further contain a silane-modified polyolefin.

The silane-modified polyolefin in the present embodiment is not particularly limited as long as it is obtained by causing a polyolefin to react with an unsaturated silane compound.

As the polyolefin caused to be reacted with the unsaturated silane compound, for example, the polyolefin exemplified in the item "polyolefin" described above can be used.

The unsaturated silane compound is also not particularly limited, and is preferably a compound represented by the following formula (2). The unsaturated silane compound may be used alone, or two or more types may be used in combination.

R³Si(R⁴)₃ (2)

(In the formula (2), R³ represents an olefinic unsaturated hydrocarbon group, R⁴s each independently represent a hydrocarbon group having 1 to 10 carbon atoms or an alkoxy group having 1 to 10 carbon atoms, and at least one of R⁴s represents an alkoxy group having 1 to 10 carbon atoms).

In the above formula (2), R³ represents an olefinic unsaturated hydrocarbon group, and preferably an olefinic unsaturated hydrocarbon group having 2 to 10 carbon atoms, and more preferably an olefinic unsaturated hydrocarbon group having 2 to 6 carbon atoms. More specific examples of R³ include alkenyl groups such as a vinyl group, a propenyl group, a butenyl group, and a cyclohexenyl group.

In the above formula (2), R⁴s each independently represent a hydrocarbon group having 1 to 10 carbon atoms or an alkoxy group having 1 to 10 carbon atoms, and preferably a hydrocarbon group having 1 to 6 carbon atoms or an alkoxy group having 1 to 6 carbon atoms, and more preferably a hydrocarbon group having 1 to 4 carbon atoms or an alkoxy group having 1 to 4 carbon atoms. In addition, at least one of R⁴s represents an alkoxy group having 1 to 10 carbon atoms, preferably an alkoxy group having 1 to 6 carbon atoms, and more preferably an alkoxy group having 1 to 4 carbon atoms.

In a case where R⁴ represents a hydrocarbon group having 1 to 10 carbon atoms, the hydrocarbon group may be any of an alkyl group, an aliphatic group, an alicyclic group, and an aromatic group, and is preferably an alkyl group. Specific examples of R⁴ include alkyl groups represented by a methyl group, an ethyl group, an isopropyl group, a t-butyl group, an n-butyl group, an i-butyl group, a cyclohexyl group, and the like, and aryl groups represented by a phenyl group and the like.

In a case where R⁴ represents an alkoxy group having 1 to 10 carbon atoms, the alkoxy group may be linear, branched, or cyclic, and is preferably linear or branched. Specific examples of R⁴ include a methoxy group, an ethoxy group, an isopropoxy group, and a β-methoxyethoxy group.

In a case where the unsaturated silane compound is represented by the formula (2), among the three R⁴s, at least one thereof is an alkoxy group having 1 to 10 carbon atoms, and it is preferable that two or more R⁴s are alkoxy groups, and more preferable that all R⁴s are alkoxy groups.

Among those represented by the formula (2), the unsaturated silane compound is more preferably vinyltrialkoxysilane represented by vinyltrimethoxysilane, vinyltriethoxysilane, propenyltrimethoxysilane, or the like. This is because the vinyl group enables modification to polyolefin, and the following crosslinking reaction proceeds by the alkoxy group.

In the crosslinking reaction, first, an alkoxy group introduced by graft modification into a modified polyolefin with an unsaturated silane compound reacts with water in the presence of a silanol condensation catalyst and is hydrolyzed to generate a silanol group. Then, modified polyolefins are bonded to each other by dehydration condensation of generated silanol groups to cause a crosslinking reaction.

A modification amount of the unsaturated silane compound of the silane-modified polyolefin in the present embodiment, that is, an amount of the unsaturated silane compound introduced into the silane-modified polyolefin by graft modification is preferably 0.1 mass% to 5 mass%. Here, from the viewpoint of heat resistance, the above modification amount is preferably 0.1 mass% or more, more preferably 0.2 mass% or more, and further preferably 0.3 mass% or more. In addition, from the viewpoint of moldability, the above modification amount is preferably 5.0 mass% or less, more preferably 4.0 mass% or less, and further preferably 3.0 mass% or less.

The modification amount of the unsaturated silane compound is a mass ratio of the unsaturated silane compound introduced by graft modification into the polyolefin before modification.

The silane-modified polyolefin in the present embodiment may be obtained by graft modification with a compound other than the unsaturated silane compound as long as the effect of the present invention is not impaired.

Examples of the compound other than the unsaturated silane compound include unsaturated carboxylic acids such as acrylic acid, methacrylic acid, ethacrylic acid, maleic acid, fumaric acid, tetrahydrophthalic acid, itaconic acid, citraconic acid, crotonic acid, and isocrotonic acid, and acid anhydrides thereof.

The silane-modified polyolefin in the present embodiment can be produced by graft-modifying a polyolefin with the unsaturated silane compound. A method for the graft modification is not particularly limited, and a method known in the related art can be adopted.

For example, solution modification, melt modification, solid phase modification by irradiation with an electron beam or ionizing radiation, modification in a supercritical fluid, or the like is suitably used. Among these, from the viewpoint of excellent facility and cost competitiveness, melt modification is preferable, and melt-kneading modification using an extruder excellent in continuous productivity is more preferable.

Examples of a device used for the melt-kneading modification include a single-screw extruder, a twin-screw extruder, a Banbury mixer, and a roll mixer. Among these, from the viewpoint of excellent continuous productivity, a single-screw extruder and a twin-screw extruder are preferable.

In general, the graft modification of the unsaturated silane compound to the polyolefin is performed by a graft reaction in which a carbon-hydrogen bond of the polyolefin is cleaved to generate a carbon radical and an unsaturated functional group is added thereto.

As a generation source of the carbon radical, in addition to the electron beam and the ionizing radiation described above, a method of setting a high temperature or a method of using a radical generator such as an organic or inorganic peroxide can be used. From the viewpoint of cost and operability, an organic peroxide is preferably used.

The radical generator may be used alone, or two or more types may be used in combination.

There is no limitation on the radical generator used in producing the silane-modified polyolefin, and examples of the organic peroxide include hydroperoxides, dialkyl peroxides, diacyl peroxides, peroxy esters, and ketone peroxides. Examples of the radical generator also include azo compounds.

Among the radical generators, the hydroperoxide groups include cumene hydroperoxide, tert-butyl hydroperoxide, and the like.

The dialkyl peroxides include dicumyl peroxide, di-tert-butyl peroxide, 2,5-dimethyl-2,5-di-tert-butyl peroxyhexane, and 2,5-dimethyl-2,5-di-tert-butyl peroxyhexyne-3.

The diacyl peroxides include lauryl peroxide, benzoyl peroxide, and the like.

The peroxy esters include tert-peroxyacetate, tert-butyl peroxybenzoate, tert-butylperoxy isopropyl carbonate, and the like.

The ketone peroxides include cyclohexanone peroxide and the like.

Examples of the azo compound include azobisisobutyronitrile and methyl azoisobutyrate.

As an operation of melt extrusion modification which is generally used, a polyolefin, an unsaturated silane compound, and an organic peroxide are mixed and blended, the mixture is charged into a kneader or an extruder, subjected to extrusion while being heated and melt-kneaded, and a molten resin coming out from a tip die is cooled in a water tank or the like to obtain a silane-modified polyolefin.

Blending ratios of the polyolefin and the unsaturated silane compound are not particularly limited, and for example, the blending ratio of the unsaturated silane compound is preferably 0.5 parts by mass to 10 parts by mass with respect to 100 parts by mass of the polyolefin. Here, from the viewpoint of obtaining a predetermined modification amount required for achieving an intended effect, the above blending ratio is preferably 0.5 parts by mass or more. In addition, from the viewpoint of preventing the remaining of a large amount of unreacted unsaturated silane compound and an adverse effect on performance, the above blending ratio is preferably 10 parts by mass or less.

Blending ratios of the unsaturated silane compound and the organic peroxide are not particularly limited, and for example, the blending ratio of the organic peroxide is preferably 0.1 parts by mass to 100 parts by mass with respect to 100 parts by mass of the unsaturated silane compound. Here, from the viewpoint that a sufficient amount of radicals is generated and a required predetermined modification amount is easily obtained, the above blending ratio is preferably 0.1 parts by mass or more. In addition, from the viewpoint of preventing deterioration of the polyolefin, the above blending ratio is preferably 100 parts by mass or less.

As conditions for the melt extrusion modification, for example, extrusion is preferably performed at a temperature of about 150°C to 300°C in a single-screw extruder or a twin-screw extruder.

The silane-modified polyolefin in the present embodiment may be produced or a commercially available product may be used. As the commercially available product, for example, a corresponding product among Linklon series manufactured by Mitsubishi Chemical Corporation can be used.

In a case where the polyolefin composition according to the present embodiment further contains a silane-modified polyolefin, an aspect of the polyolefin composition according to the present embodiment includes a polyolefin composition obtained by melt-kneading a polyolefin, a zinc compound represented by the formula (1) or the formula (1)', and a silane-modified polyolefin.

In addition, another aspect includes a polyolefin composition obtained by melt-kneading a polyolefin, an unsaturated silane compound, and a radical generator as raw materials of a silane-modified polyolefin, and simultaneously performing production of the silane-modified polyolefin by graft modification and melt-kneading of the polyolefin and the zinc compound represented by the formula (1) or the formula (1)'.

In the another aspect, instead of the melt-kneading of the polyolefin and the zinc compound represented by the formula (1) or the formula (1)', melt-kneading with a silanol condensation catalyst masterbatch containing the polyolefin and the zinc compound represented by the formula (1) or the formula (1)' may be performed.

As described above, even in a case where the polyolefin composition according to the present embodiment contains the silane-modified polyolefin, aspects such as an order of the melt-kneading is not limited at all.

### <<Other Components>>

In the polyolefin composition according to the present embodiment, in addition to the components described above, optional components such as other additives and resins other than the polyolefin can be blended according to various purposes within a range in which the effect of the present invention is not significantly impaired.

Examples of the other additives include an antioxidant, a lubricant, a colorant, a heat stabilizer, a light stabilizer, an ultraviolet absorber, a neutralizer, an antifogging agent, an antiblocking agent, a slip agent, a flame retardant, a dispersant, an antistatic agent, a conductivity-imparting agent, a metal deactivator, a molecular weight modifier, an antibacterial agent, a fluorescent brightener, a crystal nucleating agent, and the like. Depending on the purpose, these may be used alone, or two or more types may be used in combination.

Examples of the antioxidant include a phenol-based antioxidant, a phosphite-based antioxidant, a thioether-based antioxidant, and the like. In a case where an antioxidant is used, the antioxidant is generally used in a range of 0.1 parts by mass to 30 parts by mass with respect to 100 parts by mass of the total polyolefin in the present embodiment.

Examples of the lubricant include oleic acid amide, erucic acid amide, silicone oil, fluororesin, and the like. In a case where a lubricant is used, the antioxidant is generally used in a range of 0.1 parts by mass to 10 parts by mass with respect to 100 parts by mass of the total polyolefin in the present embodiment.

Examples of the other resins include a styrene-based thermoplastic elastomer, a polyester resin, a polyamide resin, a styrene resin, an acrylic resin, a polycarbonate resin, a polyvinyl chloride resin, various elastomers (excluding those corresponding to the polyolefin in the present embodiment), and the like. The other resins exemplified above may be used alone, or two or more types may be used in combination. The other resins are generally used in an amount of 50 parts by mass or less based on 100 parts by mass of the total polyolefin in the present embodiment.

### <<Method for Producing Polyolefin Composition>>

The polyolefin composition according to the present embodiment can be produced by kneading the zinc compound represented by the formula (1) or the formula (1)' and the polyolefin together with the silane-modified polyolefin and the other components as necessary under a condition of 120°C to 230°C in a twin-screw kneader or the like. In addition, the polyolefin composition may be pelletized as necessary.

### <<Form and Characteristics of Polyolefin Composition>>

### ·Masterbatch

The polyolefin composition according to the present embodiment is, for example, preferably formed into a masterbatch, more preferably a catalyst masterbatch, and further preferably a silanol condensation catalyst masterbatch. Here, the formation of a masterbatch refers to a state in which a polyolefin composition blended with an active component such as a silanol condensation catalyst at a high concentration is pelletized by, for example, granulation or pulverizing a resin mass.

The catalyst masterbatch in the present embodiment is formed of the polyolefin composition according to the present embodiment. By using the polyolefin composition according to the present embodiment as a catalyst masterbatch for producing a crosslinked product, it is possible to provide a silane-crosslinked molded body having a good hue, that is, reduced yellowness, and preferably further reduced odor.

### ·Hue

The yellowness of the polyolefin composition according to the present embodiment in a state in which the silane-modified polyolefin is not contained is preferably 20 or less, more preferably 15 or less, further preferably 10 or less, and a lower value is more preferable, in consideration of an influence on a molded body obtained by adding the silane-modified polyolefin and performing melt-kneading. Here, the yellowness is a value measured in accordance with JIS Z 8722:2009 by pelletizing a polyolefin composition containing no silane-modified polyolefin.

### <Molded Body>

The molded body according to the present embodiment is obtained by molding a polyolefin composition containing a silane-modified polyolefin. As described above, the molded body may be obtained by melt-kneading the polyolefin, the zinc compound represented by the formula (1) or the formula (1)', and the silane-modified polyolefin, and molding the melt-kneaded product by various molding methods.

Examples of the various molding methods include extrusion molding, injection molding, and press molding.

The molded body according to the present embodiment may be a silane-crosslinkable molded body containing the silane-modified polyolefin and the zinc compound represented by the formula (1), and the zinc compound represented by the formula (1) is preferably the zinc compound represented by the formula (1)'.

As another aspect of the molded body according to the present embodiment, a molded body may be obtained by melt-kneading a polyolefin, an unsaturated silane compound, and a radical generator as raw materials of a silane-modified polyolefin, and thereby simultaneously performing production of the silane-modified polyolefin by graft modification and melt-kneading of the polyolefin and the zinc compound represented by the formula (1) or the formula (1)'.

In the another aspect, a molded body may be obtained by performing, instead of the melt-kneading of the polyolefin and the zinc compound represented by the formula (1) or the formula (1)', melt-kneading with a silanol condensation catalyst masterbatch containing the polyolefin and the zinc compound represented by the formula (1) or the formula (1)'.

### <Silane-crosslinked Molded Body>

The silane-crosslinked molded body according to the present embodiment is obtained by crosslinking the molded body described in the above <molded body>, such as a molded body obtained by molding a polyolefin composition containing a silane-modified polyolefin or a silane-crosslinkable molded body containing the silane-modified polyolefin and the zinc compound represented by the formula (1) or the formula (1)'. Specifically, for example, the molded body can be crosslinked by exposing the molded body to a water atmosphere to promote a crosslinking reaction between silanol groups.

Various conditions can be adopted for a method of exposing the molded body to a water atmosphere. Examples thereof include a method of allowing the molded body to stand in air containing moisture, a method of blowing air containing steam, a method of immersing the molded body in a water bath, and a method of spraying warm water in a mist form.

In the crosslinking reaction between silanol groups, a hydrolyzable alkoxy group in the silane-modified polyolefin reacts with water in the presence of the zinc compound represented by the formula (1) or the formula (1)' in the polyolefin composition and is hydrolyzed, thereby forming a silanol group. The crosslinking reaction proceeds by dehydration condensation of the generated silanol groups, and silane-modified polyolefins are bonded to each other to generate a silane-crosslinked polyolefin, thereby obtaining a silane-crosslinked molded body.

A progress rate of the crosslinking reaction is determined by a condition of exposure to a water atmosphere, and the molded body is generally exposed to a water atmosphere in a temperature range of 20°C to 130°C for a range of 10 minutes to 2 weeks. A particularly preferable condition is a temperature range of 60°C to 110°C and a range of 1 hour to 160 hours.

As the method of exposing the molded body to a water atmosphere, when air containing moisture is used, a relative humidity of the air is selected from a range of 1% to 100%.

A gel fraction (crosslinking degree) of the silane-crosslinked molded body, which is a silane-crosslinked polyolefin, is a mass ratio of an insoluble part after a xylene boiling point extraction.

Specifically, the gel fraction can be determined by subjecting the silane-crosslinked molded body according to the present embodiment to Soxhlet extraction with xylene, measuring a material of an insoluble matter when extraction is performed for 10 hours with boiling xylene, that is, a mass after drying, and taking a ratio to a mass before extraction. More specifically, the gel fraction is measured by a method described in the section of Examples below.

The gel fraction is preferably 50% or more from the viewpoint that the silane-crosslinked polyolefin exhibits excellent characteristics over a long period of time. An upper limit of the gel fraction is not particularly limited, and is generally 100% (complete crosslinking) or less, and is preferably 90% or less from the viewpoint of preventing the progress of crosslinking during molding.

The gel fraction can be adjusted by changing a graft ratio (modification amount) of the unsaturated silane compound of the silane-modified polyolefin, a type and a blending amount of the zinc compound represented by the formula (1) or the formula (1)', which is a silanol condensation catalyst, conditions (temperature and time) for crosslinking, and the like.

The silane-crosslinked molded body according to the present embodiment can be suitably used in various shapes and aspects such as an electric wire coating material, a cable coating material, a pipe, a hose, a tube, various containers, a sealing material, a film, and a sheet.

Among these, the silane-crosslinked molded body according to the present embodiment is preferably a coolant tube or a coolant tube member. The silane-crosslinked molded body according to the present embodiment is also preferably a lithium ion battery separator or a lithium ion battery separator member.

The present invention also relates to use of the silane-crosslinked molded body.

Specifically, as an aspect of the use of the silane-crosslinked molded body according to the present embodiment, use as a coolant tube, use as a coolant tube member, use as a lithium ion battery separator, and use as a lithium ion battery separator member are exemplified.

The polyolefin composition, the silane-crosslinkable molded body, and the silane-crosslinkable molded body and the use of the same according to the present embodiment have been described in detail above, and one aspect of the present invention will be further described below.

An aspect 1 of the present invention is a polyolefin composition containing a silanol condensation catalyst and a polyolefin, in which
the silanol condensation catalyst contains a zinc compound represented by the following formula (1), and
a content of the zinc compound in the polyolefin composition is 0.3 mass% or more.

   Zn(OCOR¹)(OCOR²) (1)
(In the formula (1), R¹ and R² each independently represent a saturated hydrocarbon group).

According to an aspect 2 of the present invention, in the polyolefin composition of the aspect 1, R¹ and R² in the formula (1) each independently represent a saturated hydrocarbon group having 5 to 15 carbon atoms.

According to an aspect 3 of the present invention, in the polyolefin composition of the aspect 2, R¹ and R² in the formula (1) each independently represent a branched saturated hydrocarbon group having 5 to 15 carbon atoms.

According to an aspect 4 of the present invention, in the polyolefin composition according to any of the aspects 1 to 3, a content of the zinc compound in the silanol condensation catalyst is 10 mass% to 100 mass%.

According to an aspect 5 of the present invention, in the polyolefin composition according to any of the aspects 1 to 4, the polyolefin contains at least one selected from the group consisting of polyethylene and polypropylene.

According to an aspect 6 of the present invention, the polyolefin composition according to any of the aspects 1 to 5 is formed into a masterbatch.

According to an aspect 7 of the present invention, the polyolefin composition according to any of the aspects 1 to 6 further contains a silane-modified polyolefin.

An aspect 8 of the present invention is a molded body obtained by molding the polyolefin composition of the aspect 7.

An aspect 9 of the present invention is a silane-crosslinked molded body in which the molded body of the aspect 8 is crosslinked.

According to an aspect 10 of the present invention, the silane-crosslinked molded body according to the aspect 9 is an electric wire coating material, a cable coating material, a pipe, a hose, a tube, a container, a sealing material, a film, or a sheet.

### Examples

Hereinafter, the present invention will be described in more detail using Examples, but the present invention is not limited to the following Examples unless it departs from the gist thereof. The values of the various production conditions and evaluation results in the following Examples mean preferred values of the upper limit or the lower limit in embodiments of the present invention, and a preferred range may be a range defined by the aforementioned upper limit or lower limit value and either the value in the Example or a combination of the values in the Examples.

### <Raw Material>

Raw materials used in Examples and Comparative Examples are shown below.

### <<Polyolefin>>

·PO-1: Novatec (registered trademark) LD400 (manufactured by Japan Polyethylene Corporation, MFR: 2 g/10 min, density: 0.92 g/cm³); low-density polyethylene (LDPE)
·PO-2: Novatec (registered trademark) LD400P (manufactured by Japan Polyethylene Corporation, MFR: 2 g/10 min, density: 0.92 g/cm³); low-density polyethylene (LDPE)
·PO-3: Novatec (registered trademark) UF240 (manufactured by Japan Polyethylene Corporation, MFR: 2 g/10 min, density: 0.92 g/cm³); linear low-density polyethylene (LLDPE)
·PO-4: Novatec (registered trademark) F30HG (manufactured by Japan Polyethylene Corporation, MFR: 2 g/10 min, density: 0.92 g/cm³); linear low-density polyethylene (LLDPE)
·PO-5: Novatec (registered trademark) HY350 (manufactured by Japan Polyethylene Corporation, MFR: 3 g/10 min, density: 0.95 g/cm³); high-density polyethylene (HDPE)
·PO-6: Novatec (registered trademark) HY350P (manufactured by Japan Polyethylene Corporation, MFR: 5 g/10 min, density: 0.95 g/cm³); high-density polyethylene (HDPE)

### <<Silanol Condensation Catalyst>>

·C-1: K-KAT (registered trademark) XK-633 (manufactured by King Industries, 100 mass% of zinc neodecanoate)
   *C-1 corresponds to the zinc compounds represented by the formula (1) and the formula (1)', and both R¹ and R² in the formula (1) or the formula (1)' represent a branched alkyl group having 10 carbon atoms.
·C-2: K-KAT (registered trademark) XK-672 (manufactured by King Industries, containing 85 mass% of zinc neodecanoate, 10 mass% of a zirconium compound, and 4.5 mass% of 1-butanol)
   *Among constituent components, the zinc neodecanoate corresponds to the zinc compounds represented by the formula (1) and the formula (1)', and both R¹ and R² in the formula (1) or the formula (1)' represent a branched alkyl group having 10 carbon atoms.
·C-3: K-KAT (registered trademark) XK-640 (manufactured by King Industries, containing 50 mass% to 60 mass% of bismuth carboxylate, less than 1.5 mass% of mining oil, and 38.5 mass% to 50 mass% of other components)
   *Containing no zinc compound.
·C-4: K-KAT (registered trademark) K-670 (manufactured by King Industries, containing less than 10 mass% to 20 mass% of alkylamine, less than 1 mass% to 3 mass% of a zinc compound, and less than 80 mass% to 90 mass% of other components)

### <<Other Components>>

·A-1: Irganox (registered trademark) 1010 (manufactured by BASF); antioxidant
·A-2: Irganox (registered trademark) MD1024 (manufactured by BASF); metal deactivator
·A-3: Sumilizer (registered trademark) WXRC (manufactured by Sumitomo Chemical Co., Ltd.); antioxidant
·A-4: Viton (registered trademark) Free Flow RC (manufactured by DuPont); lubricant

### <<Silane-Modified Polyolefin>>

·Linklon XLE830N (manufactured by Mitsubishi Chemical Corporation, MFR: 0.4 g/10 min, density: 0.93 g/cm³); silane-modified linear low-density polyethylene (LLDPE).

### <Measurement and Evaluation Method>

### <<Measurement of Polyolefin Composition>>

### ·Melt flow rate (MFR)

The MFR of the pelletized polyolefin composition was measured in accordance with JIS K 7210:1999 at 190°C under a load of 21.2 N. The results are shown in Table 1.

### ·Hue (yellowness (YI) of pellet)

The yellowness of the pelletized polyolefin composition was measured with reference to JIS Z 8722:2009. Here, considering an influence on the molded body obtained by melt-kneading the polyolefin composition and the silane-modified polyolefin, it can be said that the yellowness of 20 or less is good (acceptable). The results are shown in Table 1.

### ·Odor

80 g of the polyolefin composition was placed in a stopper-equipped Erlenmeyer flask having a volume of 500 mL, and the flask was capped and allowed to stand in a thermostatic chamber at 23°C and 50% RH for 24 hours. Thereafter, within 10 minutes after the stopper was opened, an odor was confirmed by five examiners, scores were given based on the following criteria, and an average value of the scores given by the five examiners was shown in Table 1. It can be said that the odor is good (acceptable) when the average value is 4.0 points or less, and a lower odor is more preferable.

### (Criteria)

Point 0: odorless
Point 1: slightly detectable odor (detection threshold concentration)
Point 2: weak odor that can be identified (recognition threshold concentration)
Point 3: easily detectable odor
Point 4: strong odor
Point 5: intense odor

### <<Measurement of Silane-crosslinked Molded Body>>

### ·Gel Fraction

A sheet (thickness: 2 mm) as a silane-crosslinked molded body was subjected to Soxhlet extraction in boiling xylene at 144°C for 10 hours, and an undissolved resin was dried, and then a mass thereof was measured. A ratio (%) with respect to a mass of the sheet as a silane-crosslinked molded body before Soxhlet extraction was calculated and used as the gel fraction. A gel fraction of 50% or more is good (acceptable). The results are shown in Table 1.

### <Example 1-1a>

A raw material formulation shown in Table 1, that is, 50 parts by mass of PO-1, 50 parts by mass of PO-2, 5 parts by mass of C-1, 2 parts by mass of A-1, 1 part by mass of A-2, 1 part by mass of A-3, and 0.3 parts by mass of A-4 were stirred with a blender. Thereafter, the mixture was charged into a twin-screw kneader (TEX25-αIII, manufactured by The Japan Steel Works, LTD.) set to a temperature of 180°C, and a strand coming out from a nozzle was cooled and solidified in a water tank and then cut into pellets to obtain a polyolefin composition A formed into a masterbatch.

An MFR, a hue, and an odor of the obtained polyolefin composition A were measured according to the method described above. The results are shown in Table 1. In addition, a blank in the raw material formulation in Table 1 means that blending was not performed.

### <Example 1-1b>

5 parts by mass of the polyolefin composition A as a catalyst masterbatch was added with respect to 100 parts by mass of Linklon XLE830N, which is a silane-modified polyolefin, and dry-blended. Thereafter, the product was put into an injection molding machine and molded into a sheet shape having a thickness of 2 mm under a condition of 220°C to obtain a molded body of a polyolefin composition A' further containing a silane-modified polyolefin.

### <Example 2-1>

The sheet-shaped molded body of the polyolefin composition A' containing the silane-modified polyolefin obtained in Example 1-1b was allowed to stand in a thermo-hygrostat at 85°C and 85% RH for 16 hours to obtain a sheet-shaped silane-crosslinked molded body A.

A gel fraction of the obtained sheet-shaped silane-crosslinked molded body A was measured according to the method described above. The results are shown in Table 1.

### <Examples 1-2a to 1-10a and Comparative Example 1-1a>

Polyolefin compositions B to K were respectively obtained in the same manner as in Example 1-1a except that the raw material formulation was as shown in Table 1. An MFR, a hue, and an odor of the obtained polyolefin compositions B to K were measured in the same manner as in Example 1-1a. The results are shown in Table 1.

In Table 1, a content of zinc of Comparative Example 1-1a is indicated by "-". This is because a structure of C-4 as the silanol condensation catalyst used could not be identified and could not be calculated.

In addition, a content of tin in each of the polyolefin compositions A to K of Examples 1-1a to 1-10a was less than 100 ppm by mass.

### <Examples 1-2b to 1-10b and Comparative Example 1-1b>

Molded bodies of polyolefin compositions B' to K' containing a silane-modified polyolefin were obtained in the same manner as in Example 1-1b using the polyolefin compositions B to K obtained in Examples 1-2a to 1-10a and Comparative Example 1-1a instead of the polyolefin composition A.

### <Examples 2-1 to 2-10 and Comparative Example 2-1>

Sheet-shaped silane-crosslinked molded bodies B to K were obtained using, instead of the sheet-shaped molded body of the polyolefin composition A' containing a silane-modified polyolefin, the sheet-shaped molded bodies of the polyolefin compositions B' to K' containing a silane-modified polyolefin obtained in Examples 1-2b to 1-10b and Comparative Example 1-1b in the same manner as in Example 2-1.

A gel fraction of each of the obtained sheet-shaped silane-crosslinked molded bodies B to K was measured in the same manner as in Example 2-1. The results are shown in Table 1.

### [Table 1]

**Table 1**

| | | | Example | | | | | | | | | | Comparative Example |
|---|---|---|---|---|---|---|---|---|---|---|---|---|---|
| | | | 1-1a | 1-2a | 1-3a | 1-4a | 1-5a | 1-6a | 1-7a | 1-8a | 1-9a | 1-10a | 1-1a |
| Olefin com position | | | A | B | C | D | E | F | G | H | I | J | K |
| Raw material formulation (part by mass) Physical property evaluation | Polyolefin | PO-1 | 50 | 50 | 50 | 50 | 50 | 50 | 50 | 50 | | | 50 |
| | | PO-2 | 50 | 50 | 50 | 50 | 50 | 50 | 50 | 50 | | | 50 |
| | | PO-3 | | | | | | | | | 20 | | |
| | | PO-4 | | | | | | | | | 80 | | |
| | | PO-5 | | | | | | | | | | 20 | |
| | | PO-6 | | | | | | | | | | 80 | |
| | Silanol condensation catalyst | C-1: content of zinc compound^{*1} 100 mass% | 5 | | 3 | 1 | | | 3 | 4 | 5 | 5 | |
| | | C-2: content of zinc compound^{*1} 85 mass% | | 5 | | | 3 | 1 | | | | | |
| | | C-3: content of zinc compound^{*1} 0 mass% | | | | | | | 2 | 1 | | | |
| | | C-4: content of zinc compound^{*3} less than 3 mass% | | | | | | | | | | | 5 |
| | Other components | A-1 | 2 | 2 | 2 | 2 | 2 | 2 | 2 | 2 | 2 | 2 | 2 |
| | | A-2 | 1 | 1 | 1 | 1 | 1 | 1 | 1 | 1 | 1 | 1 | 1 |
| | | A-3 | 1 | 1 | 1 | 1 | 1 | 1 | 1 | 1 | 1 | 1 | 1 |
| | | A-4 | 0.3 | 0.3 | 0.3 | 0.3 | 0.3 | 0.3 | 0.3 | 0.3 | 0.3 | 0.3 | 0.3 |
| | MFR (g/10 min) | | 4 | 4 | 3 | 3 | 3 | 3 | 4 | 4 | 8 | 4 | 4 |
| | Hue (-) | | 1 | 8 | 1 | 1 | 8 | 7 | 13 | 10 | 6 | 6 | 34 |
| | Odor (-) | | 2.2 | 3.7 | 1.9 | 1.8 | 3.3 | 2.5 | 1.0 | 0.8 | 1.9 | 1.9 | 4.8 |
| | Content of zinc compound^{*2} (mass%) | | 4.6 | 3.9 | 2.7 | 0.9 | 2.3 | 0.8 | 2.7 | 3.7 | 4.6 | 4.6 | Less than 0.1^{*4} |
| | Content of zinc^{*5} (mass%) | | 0.74 | 0.63 | 0.43 | 0.14 | 0.37 | 0.13 | 0.43 | 0.59 | 0.74 | 0.74 | - |

| | | | Example | | | | | | | | | | Comparative Example |
|---|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 | 2-1 |
| Silane-crosslinked molded body (sheet-shaped) | | | A | B | C | D | E | F | G | H | I | J | K |
| Evaluation | Gel fraction | | 70 | 72 | 61 | 60 | 63 | 59 | 72 | 74 | 64 | 65 | 79 |

| | | | | | | | | | | | | | |
|---|---|---|---|---|---|---|---|---|---|---|---|---|---|
| *1 Content of zinc compound represented by formula (1) in silanol condensation catalyst *2 Content of zinc compound represented by formula (1) in polyolefin composition *3 Content of zinc compound in silanol condensation catalyst *4 Content of zinc compound in polyolefin composition *5 Content of zinc in polyolefin composition | | | | | | | | | | | | | |

According to the results of Table 1, evaluation results of the hue (yellowness) and the odor of the olefin compositions A to J according to the present embodiment were both better than those of the olefin composition K, and in particular, the yellowness was a very low value. In addition, it was confirmed that all of the sheet-shaped silane-crosslinked molded bodies A to J obtained by crosslinking a silane-modified polyolefin using the olefin compositions A to J showed a high level of gel fraction, and the olefin compositions A to J had good crosslinking performance.

Although the present invention has been described in detail with reference to the specific embodiment, it will be apparent to those skilled in the art that various changes and modifications can be made without departing from the spirit and scope of the present invention. The present application is based on a Japanese patent application filed on January 16, 2023 (Japanese Patent Application No. 2023-004649), the entireties of which are incorporated by reference.

## Claims

1. A polyolefin composition comprising a zinc compound represented by the following formula (1)' and a polyolefin:
Zn(OCOR¹)(OCOR²) (1)'
(in the formula (1)', R¹ and R² each independently represent a branched saturated hydrocarbon group having 9 to 11 carbon atoms).

2. The polyolefin composition according to claim 1, wherein
a content of tin is less than 100 ppm by mass.

3. The polyolefin composition according to claim 1 or 2, wherein
a content of zinc is 0.10 mass% or more.

4. The polyolefin composition according to claim 3, wherein
the content of zinc is 3.0 mass% or less.

5. The polyolefin composition according to claim 1 or 2, comprising
at least one selected from the group consisting of polyethylene and polypropylene as the polyolefin.

6. The polyolefin composition according to claim 1 or 2, which is a catalyst masterbatch.

7. The polyolefin composition according to claim 1 or 2, further comprising
a silane-modified polyolefin.

8. A silane-crosslinkable molded body comprising a silane-modified polyolefin and a zinc compound represented by the following formula (1)':
Zn(OCOR¹)(OCOR²) (1)'
(in the formula (1)', R¹ and R² each independently represent a branched saturated hydrocarbon group having 9 to 11 carbon atoms).

9. A silane-crosslinked molded body wherein the silane-crosslinkable molded body according to claim 8 is crosslinked.

10. The silane-crosslinked molded body according to claim 9, which is an electric wire coating material, a cable coating material, a pipe, a hose, a tube, a container, a sealing material, a film, or a sheet.

11. The silane-crosslinked molded body according to claim 9, which is a coolant tube.

12. The silane-crosslinked molded body according to claim 9, which is a coolant tube member.

13. The silane-crosslinked molded body according to claim 9, which is a lithium ion battery separator.

14. The silane-crosslinked molded body according to claim 9, which is a lithium ion battery separator member.

15. Use of the silane-crosslinked molded body according to claim 9 as a coolant tube.

16. Use of the silane-crosslinked molded body according to claim 9 as a coolant tube member.

17. Use of the silane-crosslinked molded body according to claim 9 as a lithium ion battery separator.

18. Use of the silane-crosslinked molded body according to claim 9 as a lithium ion battery separator member.
